# EUROPEAN PATENT SPECIFICATION

(11) **EP 1 619 966 B1**
(45) Date of publication and mention of the grant of the patent: **06.12.2006**
(21) Application number: 03816640.1
(22) Date of filing: 17.12.2003
(51) Int. Cl.: A23N 1/00, A23N 1/02

(54) **JUICE EXTRACTOR AND JUICE EXTRACTION PROCESS WITH ANNULAR DISTRIBUTOR**
SAFTEXTRAKTOR UND SAFTEXTRAHIERPROZESS MIT RINGFÖRMIGEM VERTEILERORGAN
EXTRACTEUR DE JUS ET PROCEDE D'EXTRACTION DE JUS AVEC DISTRIBUTEUR ANNULAIRE

(30) Priority: 16.04.2003 IT PR20030029
(43) Date of publication of application: 01.02.2006
(73) Proprietor: CFT S.p.A., 43100 Parma (IT)
(72) Inventor: DALL'ARGINE, Franco, I-43100 Parma (IT)
(74) Representative: Gotra, Stefano
(86) International application number: PCT/IT2003/000828
(87) International publication number: WO 2004/091323

(56) References cited:
- WO-A-00/47065
- DE-C- 812 276
- US-A- 2 142 649
- US-A- 4 643 085

## Description

The present invention relates to an apparatus and a method for the orderly distribution of vegetable pulp with peels, seeds and stalks to a blade rotor for the extraction of juice and puree, at ambient temperature.

To extract juice and puree at ambient temperature, it is necessary to use devices capable of mechanically reproducing the action of softening the product, which is normally achieved by heating the product.

The document EP 0511174 discloses a method for the treatment at ambient temperature of a product containing pulp destined to the extraction of juice and puree, which entails subjecting the product to an extraction sequence in which juice is not extracted, consisting of compression stresses in rapid sequence, which soften the product reducing the consistency of the product and enhancing the tendency of the product to be peeled and to be separated from the peel.

The same document teaches that the product is fed into a device having a stator provided with rounded projections which develop along the generatrix of the stator and have inclined flanks, and that the product, actuated by a rotor with projections having rounded edges, passes along the stator through impacts and motion changes which generate on the product a high sequence of compression stresses in rapid sequence, which soften the product.

In effect, the particular arrangement of the blades of the rotor and of the corresponding projections present on the stator, causes the product to undergo a series of compression stresses in rapid sequence which flake the product, effectively separating the pulp from the peel. However, a drawback of such stresses is that the seeds too can be crushed and broken up and the stalks can be frayed.

An additional drawback of said stresses is that they favour the incorporation of air by the product, with the consequence of a possible colour change and darkening of the pulp.

US-A-4643085 discloses a juice extractor comprising a rotor with blades for the extraction of juice and puree, and means for cutting the product into uniform slices or strips. Said apparatus is not suitable for distributing uniformly the product within the rotor.

### DISCLOSURE OF INVENTION.

An object of the present invention is to eliminate the aforesaid drawbacks and to make available a method and a device which allow equally to distribute the pulp into the large recesses of the rotor defined by contiguous blades.

Laboratory studies carried out by the Applicant have enabled to discover that surprisingly the equal distribution allows to maintain seeds and stalks intact without penalising efficiency in terms of productivity and quality of separation of the peels.

Another object is to allow this within a simple and economical solution. Said objects are fully achieved by the method and by the apparatus of the present invention, which are characterised by the contents of the appended claims.

The apparatus is preferably completed with a conical sieve which surrounds the rotor, progressively widening in the direction of advance of the product, said sieve, together with the convex bottom in which the rotor blade are joined, being so shaped as to generate a motion of the product that results from the composition of two motions: a slow linear motion towards the greater diameter of the sieve and a faster circular motion from the sieve to a blade, to the bottom of the blade and back to the sieve after detaching from the blade.

The present invention further relates to a method for the orderly distribution of vegetable pulp which entails feeding the rotor with the product in such a way that the product is distributed uniformly into the rotor recesses and in which the distribution is such as preferably to generate a motion of the product resulting from the composition of two motions: a slow linear motion towards the greater diameter of a sieve which encompasses the rotor and a faster circular motion from the sieve to a blade of the rotor, to the bottom of the blade and back to the sieve after detaching from the blade.

### BRIEF DESCRIPTION OF DRAWINGS.

These and other features shall become more readily apparent from the following description of a preferred embodiment illustrated, purely by way of non limiting example, in the accompanying drawing tables, in which:
- Figure 1 shows a partially sectioned side view of the apparatus;
- Figure 2 shows a cross section of the apparatus according to the direction A-A of Figure 1;
- Figure 3 shows perspective view of a detail of the apparatus which highlights the shape and disposition of the sectors fastened internally to the cylinder.

### BEST MODE FOR CARRYING OUT THE INVENTION.

With reference to the figures, the number 1 globally designates an apparatus for the orderly distribution of vegetable pulp to a subsequent rotor 2 of the type with rotating blades 3 for the extraction of juice and puree.

The product to be treated, normally vegetable pulp with peels, seeds and stalks or whole product, reaches an auger 4 through a feeding hopper 5.

The auger, which constitutes means for feeding the product, is set in rotation in known fashion in the direction indicated by an arrow 6 and feeds the product towards the rotor 2 at the start of which are normally positioned means for cutting the product into slices or into uniform strips, constituted for example by known cutters 7.

To the terminal part of the auger is originally applied a cylindrical body 8 provided on its own inner lateral surface with a plurality of sectors 9, all inclined in the same manner relative to the generatrix of the cylindrical body and having a height equal to about 1/20 of the diameter of the cylindrical body and a width equal to about 1/3 of its own height.

The cylindrical body 8 rotates integrally with the auger 4 at a considerably slower speed than the rotor 2 and the sectors 9 have such shape, positioning and dimensions as to distribute the product uniformly into recesses 10 of the rotor, i.e. in the cavities defined between two contiguous blades of the rotor, which rotates in the opposite direction to the auger, as shown by the arrow 11.

The cylindrical body 8 substantially encompasses an initial portion of the rotor to provide for a continuous and uniform distribution of the product into the recesses of the rotor itself.

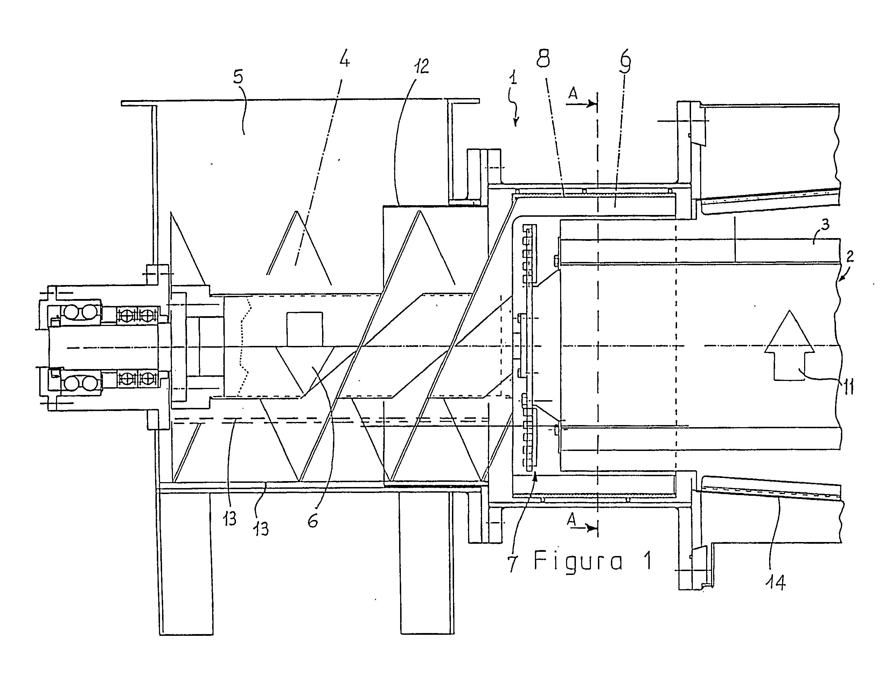

Before the rotor, as shown in Figure 1, there can also be a fixed cylinder 12 provided on its own inner lateral surface with projections 13 (preferably either 4 or 6 projections, distributed under the centreline of the auger) able to prevent the product from rotating with the auger without advancing towards the rotor, and such as to make product feeding globally more efficient.

Downstream of the cylindrical body 8 the rotor 2 is surrounded by a sieve 14 having conical shape, which widens in the direction of advance of the product.

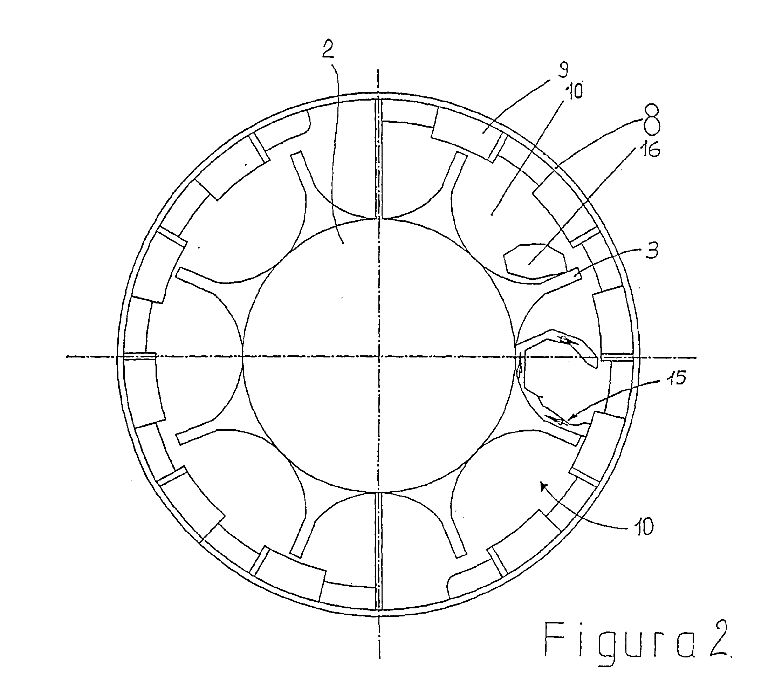

The conical shape of the sieve, together with the convexity of the bottom of the recesses 10, generates a motion of the product (indicated by the reference number 15 in Figure 2) given by the composition of two motions: a slow linear motion towards the greater diameter of the sieve and a faster circular motion from the sieve to a blade, to the bottom of the blade and back to the sieve after detaching from the blade.

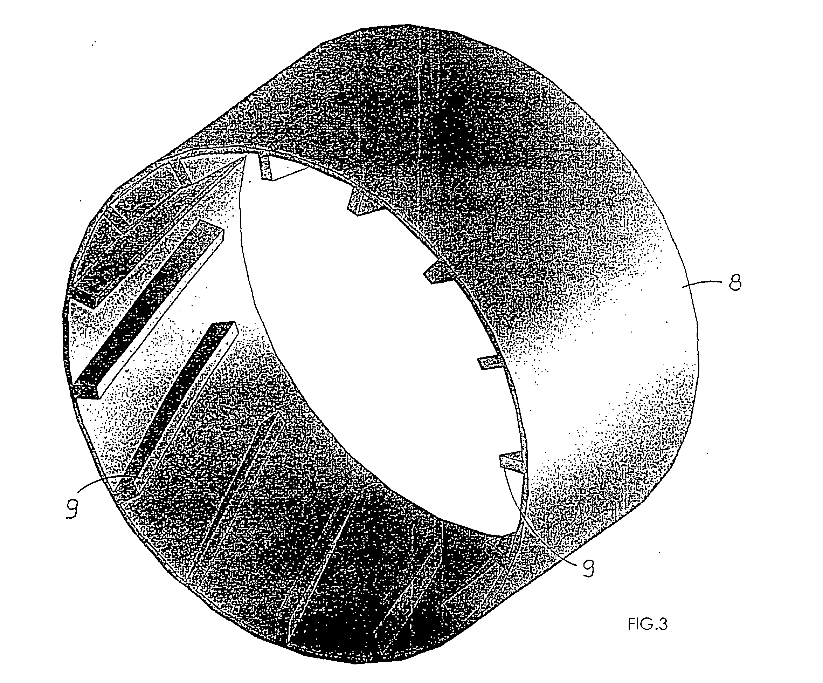

The number of the sectors 9, illustrated in detail in Figure 3, is preferably double the number of the rotor recesses an din any case their number ranges between 1.5 and 3 times the number of the rotor recesses.

Product distribution takes place in such a way that into each recess is distributed a quantity of product whose volume (designated as 16 in Figure 2) is equal to about 7 - 25% of the volume of the recess itself.

Exiting the rotor, the product exhibits the detachment of the pulp from the peels, whilst the seeds are whole and the stalks are not frayed.

An additional advantage of the method and the apparatus of the present invention is that a reduced incorporation of air has been observed than in prior art solutions.

It has also been observed that the apparatus provides better performance in the presence of a smaller number of blades of the rotor than in the prior art, and in particular with 8 blades. This allows to operate with larger recesses in which the product is subjected to lesser compression stresses and thus is treated more delicately, preventing the breakage of the seeds or the fraying of the stalks.

The cylindrical body 8 thus constitutes an annular distributor, rotating together with the auger, which allows to separate into small, equal quantities all the components of the broken-up product (pulp, peels, seeds, stalks) and uniformly to feed the bladed rotor.

The sectors 9 are such as to prolong the action of the auger in reverse fashion: the auger causes the advance of the whole product with an outward thrust, whilst the cylindrical body with the sector cause the advance of the broken-up product with an inward thrust, executing a precise distribution into each recess and thereby allowing a high juice extraction efficiency without damaging seeds and stalks.

## Claims

1. Juice extractor comprising a rotor (2) with blades (3) for the extraction of juice and puree:
- a rotating auger (4) for feeding a whole product;
- possible means (7) for cutting the product into uniform slices or strips, **characterised in that** it comprises a cylindrical body (8) substantially encompassing an initial portion of the rotor, such a cylindrical body being integral to said auger, rotating in opposite direction with respect to the rotor, and being provided on its own inner lateral surface with a plurality of sectors (9) which are inclined relative to the generatrix of the cylinder, so dimensioned and shaped as to prolong the advancing action of said auger and distribute the product uniformly within recesses (10) of the rotor (2).

2. An apparatus as claimed in claim 1, wherein the cylindrical body (8) is applied to the auger (4) and rotates integrally therewith at a greatly lower speed than that of the rotor (2).

3. An apparatus as claimed in claim 1, wherein the number of the sectors (9) is about double the number of the recesses (10) of the rotor (2), and anyway it is between 1.5 and 3 times the number of the recesses of the rotor.

4. An apparatus as claimed in claim 1, adapted such that, when in use, in each recess (10) is distributed a quantity (16) of product whose volume is about 7 - 25 % of the volume of the recess itself.

5. An apparatus as claimed in claim 1, wherein the apparatus is completed with a conical sieve (14) that surrounds the rotor (2) progressively widening in the direction of advance of the product, said sieve (14), together with the convex bottom in which the blades (3) of the rotor are joined, being shaped in such a way as to generate a movement (15) of the product given by the composition of two motions: a slow linear motion towards the greater diameter of the sieve and a faster circular motion from the sieve to a blade, to the bottom of the blade and back to the sieve after detaching from the blade.

6. An apparatus as claimed in claim 2, wherein is present a fixed cylinder (12), which surrounds the terminal part of the auger (4), provided on its own inner lateral surface with a plurality of projections (13) able to prevent the product from rotating with the auger without advancing and such as to make the feeding of the product globally more efficient.

7. An apparatus as claimed in claim 1, wherein the cylindrical body (8) with the sectors (9) are so shaped as to cause an advance of the product, broken up by the cutting means, with inward thrust, i.e. with opposite thrust relative to the outward thrust exerted by the means for feeding the whole product.

8. An apparatus as claimed in claim 1, wherein the height of the sectors (9) of the cylindrical body (8) is equal to about 1/20 of the diameter of the cylindrical body and its width is about 1/3 of its own height.

9. A method for the orderly distribution of vegetable pulp with peels, seeds and stalks to a bladed rotor for the extraction of juice and puree, of the type comprising:
- feeding a whole product, preferably by means of a rotating auger;
- optionally cutting the product into uniform slices or strips,
**characterised in that** it provides for feeding the rotor with the product in such a way that the product is distributed uniformly within the recesses of the rotor, in such a way that into each recess is distributed a quantity of product whose volume is equal to about 7 - 25% of the volume of the recess itself and in such a way as to generate a motion of the product that results from the composition of two motions: a slow linear motion towards the greater diameter of a sieve that encompasses the rotor and a faster circular motion from the sieve to a blade of the rotor, to the bottom of the blade and back to the sieve after detaching from the blade.

## Patentansprüche

1. Saftextraktor umfassend
- einen Rotor (2) mit Blättern (3) zur Extraktion von Saft und Püree,
- eine drehende Schnecke (4) zur Zufuhr ganzer Produkte;
- gegebenenfalls Mittel (7) zum Zerschneiden des Produktes in gleichmässige Scheiben oder Streifen,
**dadurch gekennzeichnet, dass** er einen zylinderförmigen Körper (8) umfasst, der im wesentlichen einen Anfangsbereich des Rotors umgreift, wobei dieser zylinderförmige Körper einstückig mit der genannten Schnecke ausgebildet ist, gegensinnig zu dem Rotor dreht und auf seiner inneren Seitenfläche eine Vielzahl von Abschnitten aufweist (9), welche gegenüber der Erzeugenden des Zylinders geneigt und derart bemessen und ausgeformt sind, dass sie die vorantreibende Wirkung der genannten Schnecke verlängern und das Produkt gleichmässig in den Ausnehmungen (10) des Rotors (2) verteilt.

2. Gerät nach Anspruch 1, bei dem der zylinderförmige Körper (8) an der Schnecke (4) angebracht ist und sich mit dieser dreht, und zwar mit einer Geschwindigkeit, die wesentlich niedriger als die des Rotors (2) ist.

3. Gerät nach Anspruch 1, bei dem die Anzahl der Abschnitte (9) etwa doppelt so hoch, wie die der Ausnehmnungen (10) des Rotors (2) ist, jedoch in jedem Fall 1,5 bis 1,3 mal so hoch, wie die Zahl der Ausnehmungen des Rotors ist.

4. Gerät nach Anspruch 1, die derart ausgebildet ist, dass im Betrieb in jede Ausnehmung (10) eine Produktmenge (16) abgegeben wird, deren Volumen bei 7-25% des Volumens der Ausnehmung selbst liegt.

5. Gerät nach Anspruch 1, bei dem das Gerät ergänzend ein kegelförmiges Sieb (14) aufweist, das den Rotor (2) umgreift, wobei es sich fortschreitend in Richtung der Bewegung des Produktes erweitert, wobei das genannte Sieb (14) zusammen mit dem gewölbten Boden, in dem die Blätter (3) des Rotors zusammenlaufen, derart ausgeformt ist, dass die Bewegung (15) des Produktes aus der Kombination zweier Bewegungen hervorgeht: einer langsamen linearen Bewegung in Richtung auf den grösseren Durchmesser des Siebs und einer schnelleren kresiförmigen Bewegung von dem Sieb in Richtung auf ein Blatt, auf den Blattboden und, nach Lösen von dem Blatt, zurück zu dem Sieb.

6. Gerät nach Anspruch 2, bei dem ein feststehender, den Endabschnitt der Schnecke (4) umgreifender Zylinder (12) vorgesehen ist, der auf seiner inneren Seitenfläche eine Vielzahl von Vorsprüngen (13) aufweist, welche das Produkt daran hindern, ohne Vorschub mit der Schnecke zu drehen, wodurch die Produktzufuhr insgesamt wirksamer wird.

7. Gerät nach Anspruch 1, bei dem der zylinderförmige Körper (8) mit den Abschnitten (9) so ausgeformt ist, dass das von den Schneidemitteln zerkleinerte Produkt mit nach innengerichtetem Schub fortbewegt wird, das heisst mit einem Schub, der dem von den Zufuhrmitteln des ganzen Produktes ausgeübten Schub entgegengerichtet ist.

8. Gerät nach Anspruch 1, bei dem die Höhe der Abschnitte (9) des zylinderförmigen Körpers (8) etwa 1/20 des Durchmessers des zylinderförmigen Körpers und ihre Breite etwa 1/3 ihrer Höhe entspricht.

9. Verfahren zur gleichförmigen Abgabe von Gemüsefruchtfleisch mit Schale, Kernen und Stilen an einen Blattrotor zum Extrahieren von Saft und Püree, der Art umfassend:
- das Zuführen ganzer Produkte, vorzugsweise mithilfe einer drehenden Schnecke;
- gegebenenfalls das Zerschneiden des Produktes in gleichmässige Scheiben oder Streifen,
**dadurch gekennzeichnet, dass** hierbei die Versorgung des Rotors mit dem Produkt derart erfolgt, dass das Produkt gleichmässig an die Ausnehmungen des Rotors verteilt wird, so dass an jede Ausnehmung eine Produktmenge abgegeben wird, deren Volumen bei 7-25% des Volumens der Ausnehmung selbst liegt und derart, dass eine Produktbewegung hervorgerufen wird, welche aus der Kombination zweier Bewegungen hervorgeht: einer langsamen linearen Bewegung in Richtung auf den grösseren Durchmesser eines Siebs, das den Rotor umgreift, und einer schnelleren kreisförmigen Bewegung von dem Sieb in Richtung auf ein Rotorblatt, auf den Blattboden und, nach Lösen von dem Blatt, zurück zu dem Sieb.

## Revendications

1. Extracteur de jus, comprenant:
- un rotor (2) pourvu de lames (3) pour l'extraction de jus et de purée,
- une vis sans fin rotative (4) d'alimentation d'un produit entier,
- éventuels moyens (7) de coupe du produit en tranches ou bandes uniformes,
**caractérisé en ce qu'**il comprend un corps cylindrique (8) substantiellement entourant une portion initiale du rotor, ce corps cylindrique faisant partie intégrante de ladite vis sans fin, pivotant en direction opposée par rapport au rotor, et étant pourvu de sa propre surface latérale interne avec une pluralité de secteurs (9) inclinés par rapport à la génératrice du cylindre, de dimensions et de forme telles qu'ils prolongent l'action d'avancement de ladite vis sans fin et distribuent le produit uniformément à l'intérieur des renfoncements (10) du rotor (2).

2. Extracteur selon la revendication 1, dans lequel le corps cylindrique (8) est appliqué à la vis sans fin (4) et pivote intégralement à cette dernière à une vitesse largement inférieure à celle du rotor (2).

3. Extracteur selon la revendication 1, dans lequel le nombre de secteurs (9) est environ le double du nombre de renfoncements (10) du rotor (2), et est de toute façon entre 1,5 et 3 fois le nombre de renfoncements du rotor.

4. Extracteur selon la revendication 1, adapté de manière à ce que, lors de son utilisation, soit distribuée dans chaque renfoncement (10) une quantité (16) de produit dont le volume est d'environ 7 à 25% du volume du renfoncement lui-même.

5. Extracteur selon la revendication 1, dans lequel l'extracteur est complété avec une passoire conique (14) qui entoure le moteur (2) en s'élargissant progressivement dans la direction d'avancée du produit, ladite passoire (14), avec le fond convexe dans lequel les lames (3) du rotor se joignent, étant conformée de manière à générer un mouvement (15) du produit donné par la composition de deux mouvements: un mouvement linéaire lent vers le diamètre le plus grand de la passoire et un mouvement circulaire plus rapide de la passoire à une lame, au fond de la lame et de nouveau vers la passoire après décrochage de la lame.

6. Extracteur selon la revendication 2, dans lequel est présent un cylindre fixe (12), qui entoure la partie terminale de la vis sans fin (4), pourvu sur sa propre surface latérale interne d'une pluralité de saillies (13) pouvant prévenir la rotation du produit avec la vis sans fin sans avancer et donc de rendre l'alimentation du produit globalement plus efficace.

7. Extracteur selon la revendication 1, dans lequel le corps cylindrique (8) avec les secteurs (9) sont conformés de manière à causer une avancée du produit, réduit par les moyens de coupe, avec une poussée vers l'intérieur, c'est à dire avec une poussée opposée par rapport à la poussée vers l'extérieur exercée par les moyens d'alimentation du produit entier.

8. Extracteur selon la revendication 1, dans lequel la hauteur des secteurs (9) du corps cylindrique (8) est égale à environ 1/20 du diamètre du corps cylindrique et sa largeur est d'environ 1/3 de sa propre hauteur.

9. Méthode pour la distribution ordonnée de pulpe végétale avec des peaux, graines et queues à un rotor à lames pour l'extraction de jus et de purée, du type comprenant:
- alimentation d'un produit entier, préférablement au moyen d'une vis sans fin rotative,
- éventuellement coupe du produit en tranches ou bandes uniformes,
**caractérisée en ce qu'**elle prévoit d'alimenter le rotor avec le produit de manière à ce que le produit soit distribué uniformément à l'intérieur du renfoncement du rotor, de manière à ce que soit distribuée dans chaque renfoncement une quantité de produit dont le volume est égal à environ 7 à 25% du volume du renfoncement lui-même et de générer un mouvement du produit qui soit le résultat de la composition de deux mouvements: un mouvement lent vers le diamètre le plus grand d'une passoire qui entoure le rotor et un mouvement circulaire plus rapide de la passoire à une lame du rotor, vers le fond de la lame et de nouveau vers la passoire après un décrochage de la lame.
